# EUROPÄISCHE PATENTSCHRIFT

(11) **EP 3 742 277 B1**
(45) Veröffentlichungstag und Bekanntmachung des Hinweises auf die Patenterteilung: **09.07.2025**
(21) Anmeldenummer: 20172845.8
(22) Anmeldetag: 05.05.2020
(51) Int. Cl.: G06F 3/12, B31D 1/02, B26D 5/00, B26F 1/38

(54) **STANZFORMBASIERTES LAYOUT**
CUTTING DIE-BASED LAYOUT
TOPOLOGIE À BASE DE FORME DE DÉCOUPE

(30) Priorität: 23.05.2019 DE 102019207544
(43) Veröffentlichungstag der Anmeldung: 25.11.2020
(73) Patentinhaber: Heidelberger Druckmaschinen AG, 69115 Heidelberg (DE)
(72) Erfinder: Basylev, Dietrich, 24594 Hohenwestedt (DE)

(56) Entgegenhaltungen:
- DE-A1- 102012 017 636
- DE-A1- 2 461 308

## Beschreibung

Die Erfindung beschäftigt sich mit einem Verfahren zur optimierten Anordnung zu druckender Nutzen zur Weiterverarbeitung mittels einer Stanzform.

Die Erfindung liegt im technischen Gebiet des Etikettendrucks.

Im Label -und Verpackungsdruck werden bedruckte Bögen oder Rollen nach dem Bedrucken in den meisten Fällen gestanzt. Die extra angefertigten Stanzen haben ein spezielles Layout, welches somit zwangsläufig festlegt, wo und wie die gedruckten Einzelnutzen auf dem Bogen platziert werden müssen. Aktuell ist es im Stand der Technik üblich, dass die Einzelnutzen gemäß Stanzenlayout in der Vorstufe in einem Zwischenschritt händisch platziert und das resultierende Layout dann als PDF-Datei für den Druck exportiert wird. Die so entstandenen PDF-Seiten werden dann auf dem Bogen platziert, gedruckt und gestanzt.

Dieses Vorgehen wird jedoch spätestens beim Einsatz von stark variablen Daten (PDF-VT), wie sie beim Digitaldruck häufig vorkommen, zum Problem. Bei solchen Druckaufträgen spielt dann nicht mehr nur die reine Platzierung der Nutzen auf dem Bedruckstoff eine Rolle, sondern auch wie genau die variierenden Inhalte auf dem Bedruckstoff verteilt werden. Solche Druckaufträge haben heutzutage schon Größenordnungen im Bereich von 10.000 bis 500.000 variierenden Inhalten, den sogenannten Records. Bei dem bisherigen Vorgehen müssten also beispielsweise 10 bis 500000 Einzelnutzen händisch platziert, über alle Bögen verteilt und dann exportiert werden. Dies stellt einen unverhältnismäßig hohen Aufwand dar. Darüber hinaus ist es gar nicht so einfach, die Einzelnutzen so genau zu platzieren, dass diese auch mit dem Stanzenlayout übereinstimmen. Bei der einzelnen Platzierung eines Datensatzes ergibt das bei 10.000 Einzelnutzen einen Druckauftrag von 556 PDF-Seiten.

Die DE102012017636A1 offenbart ein Verfahren zum Bestimmen des maschinenabhängigen Zurichtebedarfs einer Stanz- und/oder -prägemaschine. Das Dokument erläutert einleitend den früheren Stand er Technik und nennt dabei das Herstellen von Verpackungen. Auch Flachbettstanzen, die von Rollendruckmaschinen kommende Bahnen inline weiterverarbeiten, werden genannt. Das effektive Anordnen von Nutzen unter Einsatz eines Rechner wird dabei allerdings nicht thematisiert.

Die DE2461308A1 offenbart ein langgestrecktes, mit Etikettaufdrucken versehenes, auf eine Vorratsrolle gewickeltes Etikettbereitstellungsband. Das effektive Anordnen von Nutzen unter Einsatz eines Rechner wird dabei ebenfalls nicht thematisiert.

Die Aufgabe der vorliegenden Erfindung besteht somit darin, ein Verfahren zu offenbaren, mit welchem eine verbesserte und effizientere Positionierung einzelner Nutzen eines Druckauftrages im Hinblick auf eine zu erfolgende Weiterverarbeitung durchgeführt werden kann.

Gelöst wird diese Aufgabe durch ein Verfahren nach Anspruch 1. Am wichtigsten ist, dass der Rechner genau in der Lage ist, das Layout der verwendeten Stanzform zu ermitteln, da er nur so die Nutzen, die später mittels der verwendeten Stanze weiterverarbeitet werden sollen, korrekt anzuordnen. Dies ist insbesondere deshalb wichtig, da das Layout der Stanzform und des Nutzens nicht immer vollständig identisch sind. Es ist ja gerade der Zweck der vorliegenden Erfindung, dass eben nicht für jeden neuen Druckauftrag mit neuen Nutzen eine komplette neue und entsprechend teure Stanzform angefertigt werden muss.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass der Rechner die verwendete Stanzform mittels einer Umrissanalyse analysiert. Da der Umriss des zweidimensionalen Nutzens natürlich bekannt ist, kann mittels der Umrissanalyse das Layout bzw. der Umriss der Stanzform ermittelt werden, wodurch dann der Rechner in der Lage ist, mittels dieser Information plus einiger zusätzlicher Parameter die Nutzen im Vorstufendokument optimiert anzuordnen.

Eine weitere bevorzugte Weiterbildung des erfindungsgemäßen Verfahrens ist dabei, dass es sich bei dem Druckauftrag um einen Druckauftrag für Verpackungsdruck handelt. Da es sich um einen Druckauftrag handelt, dessen bedruckte Nutzen mittels einer Stanzform weiterverarbeitet werden, bietet es sich an diese bedruckten Nutzen entsprechend für den Verpackungsdruck zu verwenden.

Eine weitere bevorzugte Weiterbildung des erfindungsgemäßen Verfahrens ist dabei, dass es sich bei den einzelnen Nutzen um Etikettenlabel für den Verpackungsdruck handelt. Die Etikettenlabel werden dann im Rahmen der Weiterverarbeitung entsprechend ausgestanzt, wobei es sich dabei meistens um selbstklebende Etiketten handelt und der Stanzvorgang derart erfolgt, dass die Etiketten nach Ende der Weiterverarbeitung dergestalt vorliegen, dass sie abgezogen und auf das eigentliche Verpackungsmaterial aufgebracht werden können.

Erfindungsgemäß liegen notwendige Daten der Stanzform und des Nutzens für eine Analyse mittels Rechner in digitaler Form vor. Andernfalls wäre natürlich keine Analyse mittels eines Rechners möglich. Bevorzugt liegt dafür dem Rechner das Datenfile, welches zur Erstellung der Stanzform benutzt wird, vor, aus dem er dann mittels Umrissanalyse das zur optimierten Sortierung notwendige Layout ermitteln kann. Es sind jedoch auch andere Arten von Ausgangsdaten denkbar, wie z.B. ein Foto der Umrisskanten einer existierenden zu verwendenden Stanzform oder ähnliche. Die entsprechend notwendigen Daten zu den Nutzen liegen üblicherweise in Form der Druckauftragsdaten vor und können vom Rechner somit problemlos analysiert und ausgewertet werden.

Eine weitere bevorzugte Weiterbildung des erfindungsgemäßen Verfahrens ist dabei, dass die Sortiervorschrift die einzelnen Nutzen hinsichtlich ihres Inhalts automatisiert entweder von links nach rechts, rechts nach links, oben nach unten oder unten nach oben in mehreren Reihen und Spalten im Vorstufendokument anordnet und ein Anwender über den Rechner die jeweils passende Sortiervorschrift auswählt. Üblicherweise liegen die Nutzen im Vorstufendokument aufgereiht in mehreren Reihen und Spalten und müssen dann, abhängig vom jeweils verwendeten Drucksubstrat, entsprechend sortiert werden. Da die Nutzen zwar prinzipiell bezüglich des Umrisses gleich sind, sich ansonsten jedoch hinsichtlich ihres Inhalts, z.B. einer Nummerierung, unterscheiden und damit nicht komplett identisch sind, müssen sie in einer entsprechenden Reihenfolge sortiert werden. Diese Reihenfolge kann dann entweder fortlaufend gemäß der Nummerierung von links nach rechts, rechts nach links, oben nach unten oder unten nach oben sein. Für den Etiketten-/Verpackungsdruck ist die Sortiervorschrift von oben nach unten meistens die am besten geeignete. Gemäß dem erfindungsgemäßen Verfahren wählt der Rechner abhängig von den vorliegenden Daten die jeweils am besten geeignete Sortiervorschrift aus und ordnet die entsprechenden Nutzen somit optimiert auf dem entsprechenden Drucksubstrat an.

Eine weitere bevorzugte Weiterbildung des erfindungsgemäßen Verfahrens ist dabei, dass als Druckmaschine eine Rollendruckmaschine verwendet wird und die optimiert angeordneten Nutzen auf ein Rollensubstrat gedruckt werden. Für den Fall eines Drucks von Etiketten für den Verpackungsdruck bedeutet das, dass die Nutzen auf der entsprechenden Rolle logischerweise nur eine geringe Anzahl von Reihen, jedoch eine große Anzahl von Spalten aufweisen und somit eine Sortierung, insbesondere von oben nach unten, fortlaufend über sämtliche Spalten der ersten Reihe aufweisen, bevor dann mit den obersten Spalten der zweiten Reihe fortgefahren wird und so weiter.

Eine weitere bevorzugte Weiterbildung des erfindungsgemäßen Verfahrens ist dabei, dass nach dem Druckprozess der Weiterverarbeitungsvorgang darin besteht, die einzelnen Nutzen mittels der Stanzform erst auszustanzen und dann in einem weiteren Schritt das bedruckte Rollensubstrat spaltenweise in Laufrichtung der Rollen in Einzelbahnen zu schneiden bzw. zu "slicen". Das Ziel besteht dabei darin, eine feste Rolle an Nutzen, insbesondere Etikettenlabels, zu erhalten, in welcher der Reihe nach durchnummeriert die einzelnen Etiketten vorhanden sind, welche dann in entsprechender Sortierung auf das eigentliche Verpackungsmaterial aufgebracht werden können.

Eine weitere bevorzugte Weiterbildung des erfindungsgemäßen Verfahrens ist dabei, dass die Enden der Einzelbahnen so an einander gefügt werden, dass aus einer breiten Rolle mit mehreren Spalten von jeweils einzeln angeordneten Nutzen eine schmale Rolle mit genau einer Spalte von angeordneten Nutzen entsteht. Mit diesem

Vorgehen kann somit sichergestellt werden, dass die gewünschte schmale Rolle mit genau einer Spalte von angeordneten Nutzen entsteht, mit der die gewünschte Anwendung der produzierten Etikettenlabels am effizientesten durchzuführen ist. Dieses erfindungsgemäße Verfahren lässt sich am besten bei einer Rollendruckmaschine mit einem Rollensubstrat anwenden, jedoch ist prinzipiell auch die Erstellung einer finalen Rolle mit selbstklebenden Etikettenlabels aus mehreren vorliegenden Druckbögen mittels des "Slicen" denkbar.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: den schematischen Aufbau eines Weiterverarbeitungssystems mit Stanze und Druckmaschine
- Figur 2:: ein Beispiel für ein digitales Stanzenlayout in der Vorstufe
- Figur 3:: ein Beispiel für zu stanzende Einzelnutzen
- Figur 4:: eine automatische Sortierfunktion für die Einzelnutzen
- Figur 5:: sortierte und platzierte Einzelnutzen in der Vorstufe
- Figur 6:: den Ablauf des Slicens

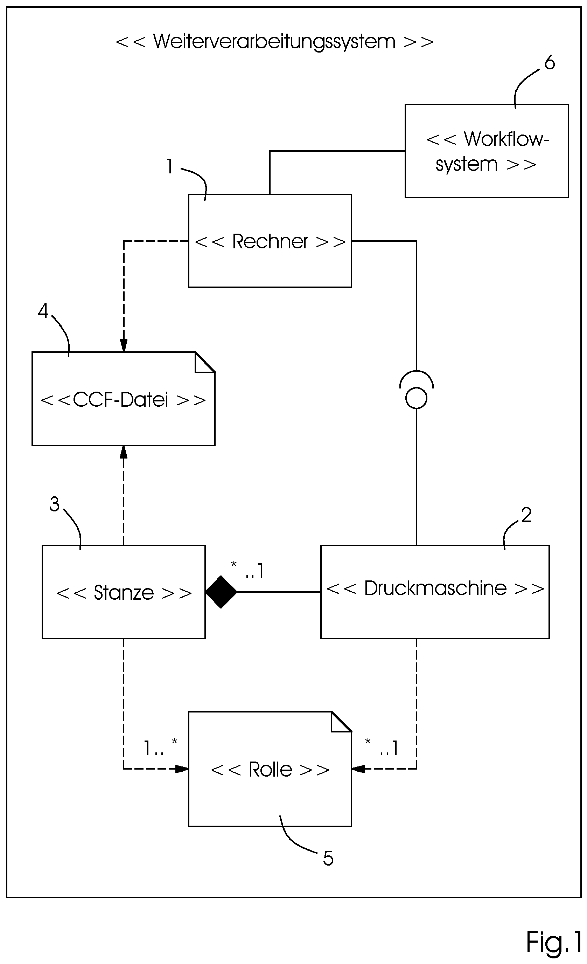

Figur 1 zeigt schematisch die für das erfindungsgemäße Verfahren notwendige Infrastruktur in der Druckerei. Ein Rechner 1 führt das erfindungsgemäße Verfahren durch. Es handelt sich hier üblicherweise um den Rechner 1 welcher die Druckvorstufe organisiert und die Bilddaten für den Druck mit der Druckmaschine 2 vorbereitet. Dies geschieht in den meisten Fällen über ein Workflowsystem 6, welches der Rechner 1 betreibt. Da eines der Ziele des Verfahrens darin besteht, möglichst viele bestehende Stanzen 3 für den Druck von Einzelnutzen wieder zu verwenden, müssen für diese Stanzen entsprechende digitale Layoutdateien 4 vorhanden sein. Falls für die Einzelnutzen des aktuellen Druckauftrages noch keine Stanze 3 existiert, muss der Nutzer eine Stanze 3 entsprechend anfertigen lassen. In beiden Fällen existiert jedoch eine entsprechende CFF2-Datei 4, anhand derer die Stanze 3 erstellt wurde.

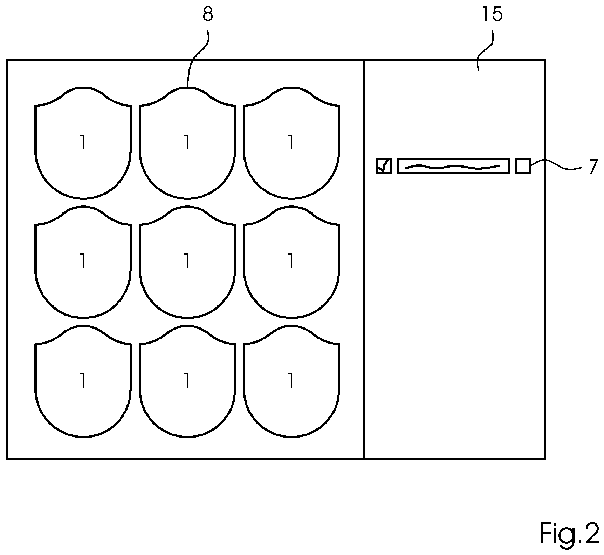

Im Folgenden wird das Verfahren in einer bevorzugten Ausführungsvariante anhand eines Beispiels eines Druck- und Stanzvorgangs für das Stanzen eines Bierflaschen-Labels näher erläutert. Die Stanze 3 wird bezüglich ihres Stanzenlayouts 8 mittels CFF2-Datei 4 exakt beschrieben. Die CFF2-Datei 4 kann dabei als neue Auswahlfunktionalität 7 in der grafischen Benutzeroberfläche 15 des Vorstufen- bzw. Workflowsystems 6 ausgewählt werden. Sobald der Nutzer diese Funktion anwählt und die entsprechende CFF2-Datei 4 auswählt, wird diese in einem Vorschaufenster angezeigt, so wie dies in Figur 2 dargestellt ist.

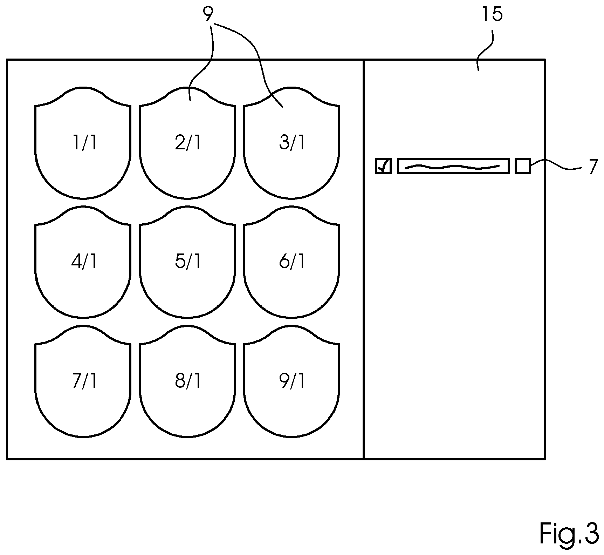

Der Nutzer wählt als nächstes eine PDF-Datei mit variablen Druckdaten aus. In dieser PDF-Datei befindet sich der entsprechende Einzelnutzen, in diesem Fall ein Bier-Label, auf dem der Haupttext personalisiert ist. In diesem Fall ein Zähler von 1 bis 10.000. Die Labels werden dann vom Rechner 1 direkt auf das Stanzenlayout 8 passgenau verteilt. Figur 3 zeigt das Ergebnis dieser automatisierten Zuordnung.

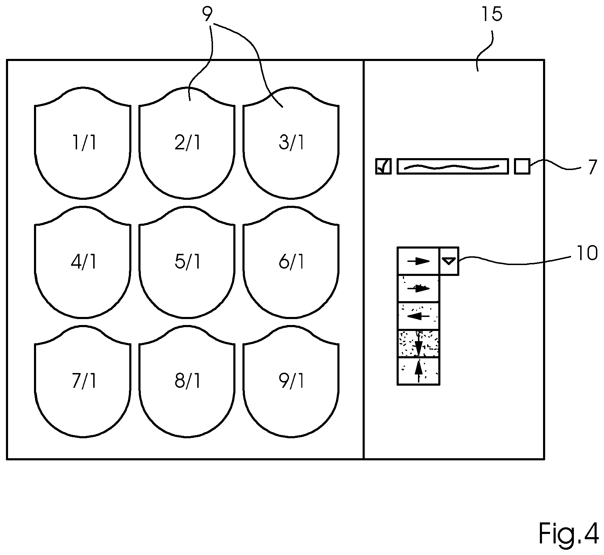

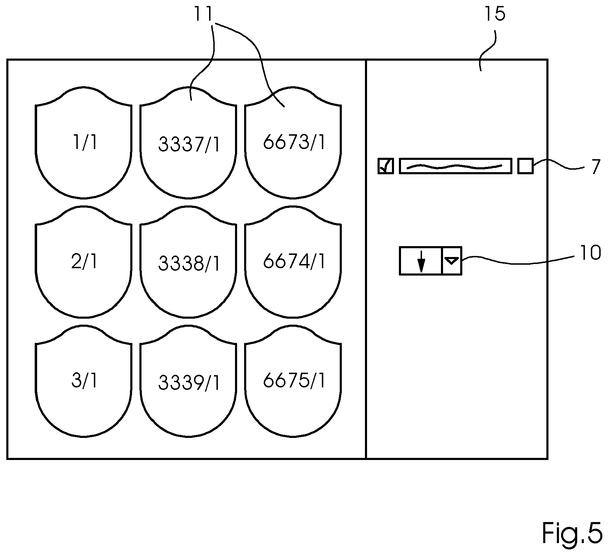

Als nächster Schritt müssen die Labels noch zielgenau für den späteren Stanzprozess auf dem Drucksubstrat 5 verteilt werden. Der Nutzen kann daher über eine entsprechende Auswahl 10 im Workflowsystem 6 die die Verteilung der Datensätze auf der Stanzform bestimmen. In Figur 3 sind die Datensätze der Labels 9 noch von links nach rechts verteilt. Wesentlich besser ist jedoch eine automatische Verteilung der Labels von oben nach unten. Hierfür wählt der Nutzer in der Benutzeroberfläche 15 den Pfeil nach unten aus. Diese Auswahlfunktion 10 ist in Figur 4 dargestellt ist. Die Labels 11 werden somit vom Rechner über das gesamte Drucksubstrat von oben nach unten verteilt. Figur 5 zeigt das Ergebnis dieser Sortierung. In dieser besonders bevorzugten Ausführungsvariante wird dabei als Drucksubstrat 5 eine Bedruckstoffrolle 5 verwendet, da der Verpackungsdruck meist als Rollendruck ausgeführt wird.

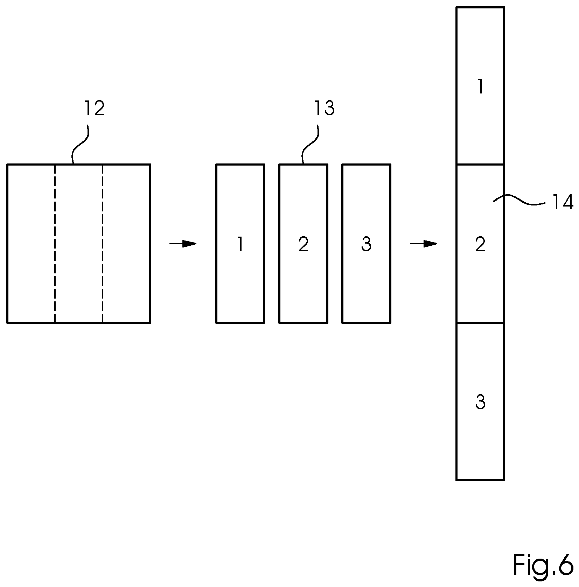

Auf dem jeweiligen Abschnitt der Rolle 5, welcher in Figur 5 dargestellt ist, sieht man jetzt in der ersten Spalte die Labels mit dem Nummerierungstext 1, 2, 3. Die zweite Spalte fängt dagegen bereits mit dem Datensatz 3337 an. Das hängt mit dem folgenden Weiterverarbeitungsschritt des "Slicen" zusammen, welches in Figur 6 näher gezeigt wird. Figur 6 zeigt dabei als erstes ganz links das Slicing-Muster 12. Dann wird die resultierende und bedruckte Rolle spaltenweise in Einzelbahnen 13 geschnitten. Dies bedeutet, die Schnitte erfolgen in Laufrichtung der Rollen 5 von oben nach unten, so dass drei Einzelbahnen 13 entstehen. Danach werden die Enden so aneinander geklebt, dass aus der breiten Rolle mit drei Spalten eine schmale Rolle 14 mit genau einer Spalte entsteht. Dadurch entsteht für die Labels nach dem Zusammenkleben eine korrekte Reihenfolge; im vorliegenden Beispiel von Figur 6 also von Label 1 bis Label 10000.

Das Verfahren läuft dabei stets so ab, dass nach dem Bedrucken der Rolle 5 diese zuerst gestanzt und danach gesliced wird. Daraus entsteht dann eine Rolle 14 mit Label-Aufklebern beginnend mit dem ersten Label und endend mit dem letzten Label.

Dieses Verfahren ermöglicht somit eine optimierte und effiziente Verteilung der zu erstellenden Einzelnutzen. Bevorzugt wird dabei von oben nach unten, unten nach oben, links nach rechts und rechts nach links verteilt. Das Verfahren ist aber nicht auf diese Verteilungsvarianten beschränkt. Es sind prinzipiell noch weitere Varianten möglich, die in der Druckbranche ebenfalls üblich sind und die sich jeweils aus den geometrischen Bedingungen ergeben, die für die jeweilige Stanzform ein Gitter von Spalten und Zeilen mit Einzelnutzen aufspannt.

### Bezugszeichenliste

- 1: Workflowrechner
- 2: Druckmaschine
- 3: Stanze
- 4: CFF-Datei
- 5: Rolle (Drucksubstrat)
- 6: Workflowsystem
- 7: Auswahlfunktion für CFF-Datei
- 8: Stanzenlayout
- 9: von links nach rechts verteilte Labels
- 10: Auswahlfunktion für automatische Sortierfunktion
- 11: von oben nach unten sortierte Labels
- 12: Slicing-Muster
- 13: geschnittene -Einzelbahnen
- 14: neu zusammengefügte Rolle mit Labels
- 15: grafische Benutzeroberfläche des Workflowsystems

## Patentansprüche

1. Verfahren zur Durchführung eines Druckauftrages, wobei einzelne Nutzen (9, 11) in einem Vorstufendokument für eine effiziente Weiterverarbeitung der gedruckten Nutzen (9, 11) mittels einer Stanzform (3) gemäß eines Stanzform-Layouts (8) optimiert angeordnet werden und nach dem Druck der Nutzen (9, 11) die Weiterverarbeitung durchgeführt wird,
**dadurch gekennzeichnet,**
**dass** eine Vielzahl von Stanzformen (3) vorliegen, für die entsprechende digitale Layoutdateien (4) vorhanden sind, und dass ein Rechner (1) eine Stanzform (3) aus der Vielzahl von Stanzformen (3) verwendet, und dabei die für die Weiterverarbeitung verwendete Stanzform (3) unter Verwendung der entsprechenden Layoutdatei analysiert, auf Basis des so ermittelten Stanzform-Layouts (8) die Nutzen (9, 11) im Vorstufendokument gemäß einer Sortiervorschrift (10) optimiert anordnet, und dann einen Druckprozess und die Weiterverarbeitung mit dem so optimierten Vorstufendokument durchführt, und dass notwendige Daten der Stanzform (3) und des Nutzens (9, 11) für die Analyse mittels des Rechners (1) in digitaler Form vorliegen.

2. Verfahren nach Anspruch 1,
**dadurch gekennzeichnet,**
**dass** der Rechner (1) die verwendete Stanzform (3) mittels einer Umrissanalyse analysiert.

3. Verfahren nach einem der vorherigen Ansprüche,
**dadurch gekennzeichnet,**
**dass** es sich bei dem Druckauftrag um einen Druckauftrag für Verpackungsdruck handelt.

4. Verfahren nach Anspruch 3,
**dadurch gekennzeichnet,**
**dass** es sich bei den einzelnen Nutzen (9, 11) um Etiketten-Label für den Verpackungsdruck handelt.

5. Verfahren nach einem der vorherigen Ansprüche,
**dadurch gekennzeichnet,**
**dass** die Sortiervorschrift (10) die einzelnen Nutzen (9, 11) hinsichtlich ihres Inhalts automatisiert entweder von links nach rechts, rechts nach links, oben nach unten oder unten nach oben in mehreren Reihen und Spalten im Vorstufendokument anordnet und ein Anwender über den Rechner (1) die jeweils passende Sortiervorschrift (10) auswählt.

6. Verfahren nach einem der vorherigen Ansprüche,
**dadurch gekennzeichnet,**
**dass** als Druckmaschine (2) eine Rollendruckmaschine verwendet wird und die optimiert angeordneten Nutzen (9, 11) auf ein Rollensubstrat (5) gedruckt werden.

7. Verfahren nach Anspruch 6,
**dadurch gekennzeichnet,**
**dass** nach dem Druckprozess der Weiterverarbeitungsvorgang darin besteht, die einzelnen Nutzen (9, 11) mittels der Stanzform (3) erst auszustanzen und dann in einem weiteren Schritt das bedruckte Rollensubstrat (5) spaltenweise in Laufrichtung der Rollen (5) in Einzelbahnen (13) zu schneiden.

8. Verfahren nach Anspruch 7,
**dadurch gekennzeichnet,**
**dass** die Enden der Einzelbahnen (13) so an einander gefügt werden, dass aus einer breiten Rolle mit mehreren Spalten von jeweils einzeln angeordneten Nutzen eine schmale Rolle (14) mit genau einer Spalte von angeordneten Nutzen entsteht.

## Claims

1. Method for performing a print job, wherein individual blanks (9, 11) are arranged in an optimized manner in a prepress document for efficient further processing of the printed blanks (9, 11) via a cutting die (3) in accordance with a cutting die layout (8), and further processing is carried out after the blanks (9, 11) have been printed,
**characterized in that**
a plurality of cutting dies (3) are present, for which corresponding digital layout files (4) are available, and **in that** a computer (1) uses a cutting die (3) from the plurality of cutting dies (3), and in the process analyzes the cutting die (3) used for further processing using the corresponding layout file, arranges the blanks (9, 11) in the prepress document in an optimized manner in accordance with a sorting rule (10) on the basis of the cutting die layout (8) thus determined, and then carries out a printing process and further processing with the prepress document thus optimized, and **in that** necessary data of the cutting die (3) and the blank (9, 11) is available in digital form for the analysis via the computer (1).

2. Method according to claim 1,
**characterized in that**
the computer (1) analyzes the cutting die (3) used via an outline analysis.

3. Method according to one of the preceding claims,
**characterized in that**
the print job is a print job for packaging printing.

4. Method according to claim 3,
**characterized in that**
the individual blanks (9, 11) are labels for packaging printing.

5. Method according to one of the preceding claims,
**characterized in that**
the sorting rule (10) automatically arranges the individual blanks (9, 11) in terms of their content either from left to right, right to left, top to bottom or bottom to top in a plurality of rows and columns in the prepress document and a user selects the appropriate sorting rule (10) in each case via the computer (1).

6. Method according to one of the preceding claims,
**characterized in that**
the printing press (2) used is a web press and the optimized blanks (9, 11) are printed on a web substrate (5).

7. Method according to claim 6,
**characterized in that**
after the printing process, the further processing operation consists of first punching out the individual blanks (9, 11) via the cutting die (3) and then, in a further step, cutting the printed web substrate (5) into individual webs (13) column by column in the running direction of the rolls (5).

8. Method according to claim 7,
**characterized in that**
the ends of the individual webs (13) are joined to one another in such a way that a narrow roll (14) with exactly one column of arranged blanks is formed from a wide roll with several columns of individually arranged blanks.

## Revendications

1. Procédé pour la réalisation d'un travail d'impression, pour lequel des poses individuelles (9, 11) sont disposées de manière optimisée dans un document de prépresse pour un traitement ultérieur efficace des poses imprimées (9, 11) au moyen d'une forme de découpe (3) selon un schéma de forme de découpe (8) et le traitement ultérieur est réalisé après l'impression des poses (9, 11),
**caractérisé en ce**
**qu'**il existe un grand nombre de formes de découpe (3) pour lesquelles des fichiers maquettes numériques (4) correspondants sont disponibles, et **en ce qu'**un ordinateur (1) utilise une forme de découpe (3) parmi un grand nombre de formes de découpe (3), et analyse alors la forme de découpe (3) utilisée pour le traitement ultérieur en utilisant le fichier maquette correspondant, dispose de manière optimisée les poses (9, 11) dans le document de prépresse sur la base de la maquette (8) de la forme de découpe ainsi déterminée, conformément à une règle de tri (10), et exécute ensuite un processus d'impression et le traitement ultérieur avec le document de prépresse ainsi optimisé, et **en ce que** des données nécessaires de la forme de découpe (3) et de la pose (9, 11) pour l'analyse au moyen de l'ordinateur (1) sont disponibles sous forme numérique.

2. Procédé selon la revendication 1,
**caractérisé en ce**
**que** l'ordinateur (1) analyse la forme de découpe (3) utilisée au moyen d'une analyse de contour.

3. Procédé selon l'une des revendications précédentes,
**caractérisé en ce**
**que** le travail d'impression est un travail d'impression pour l'impression d'emballages.

4. Procédé selon la revendication 3,
**caractérisé en ce**
**que** les différentes poses (9, 11) sont des étiquettes pour l'impression d'emballages.

5. Procédé selon l'une des revendications précédentes,
**caractérisé en ce**
**que** la règle de tri (10) dispose les différentes poses (9, 11), en fonction de leur contenu, de manière automatisée, soit de gauche à droite, soit de droite à gauche, soit de haut en bas, soit de bas en haut, en plusieurs rangées et colonnes dans le document de prépresse, et **en ce qu'**un utilisateur sélectionne, par l'intermédiaire de l'ordinateur (1), la règle de tri (10) adaptée à chaque cas.

6. Procédé selon l'une des revendications précédentes,
**caractérisé en ce**
**que** l'on utilise comme machine à imprimer (2) une presse à bobines et **en ce que** les poses (9, 11) disposées de manière optimisée sont imprimées sur un substrat de bobine (5).

7. Procédé selon la revendication 6,
**caractérisé en ce**
**qu'**après le processus d'impression, l'opération de traitement ultérieur consiste à découper d'abord les différentes poses (9, 11) au moyen de la forme de découpe (3), puis, dans une étape suivante, à découper le substrat de bobine imprimé (5) en bandes individuelles (13), colonne par colonne, dans le sens de déplacement des bobines (5).

8. Procédé selon la revendication 7,
**caractérisé en ce**
**que** les extrémités des bandes individuelles (13) sont assemblées les unes aux autres de manière à obtenir, à partir d'une bobine large avec plusieurs colonnes de poses disposées individuellement, une bobine étroite (14) avec exactement une colonne de poses disposées.
